# FASCICULE DE BREVET EUROPEEN

(11) **EP 4 650 555 B1**
(45) Date de publication et mention de la délivrance du brevet: **02.12.2026**
(21) Numéro de dépôt: 25177023.6
(22) Date de dépôt: 16.05.2025
(51) Int. Cl.: E05B 47/00, E05B 63/18

(54) **SYSTÈME DE FIXATION PAR DISPOSITIF DE VERROUILLAGE AIMANTÉ À BASCULE**
BEFESTIGUNGSSYSTEM MIT EINER MAGNETISCHEN VERRIEGELUNGSVORRICHTUNG MIT KIPPSCHALTUNG
FASTENING SYSTEM WITH A MAGNETIC TOGGLE LOCKING DEVICE

(30) Priorité: 17.05.2024 FR 2405092
(43) Date de publication de la demande: 19.11.2025
(73) Titulaire: Faurecia Intérieur Industrie, 92000 Nanterre (FR)
(72) Inventeur: PONTHIEU, Didier, 60480 La Neuville Saint Pierre (FR); BELLIARD, Sylvain, 72700 Rouillon (FR)
(74) Mandataire: Novagraaf Group

(56) Documents cités:
- US-A- 3 681 727
- US-A1- 2023 151 648

## Description

La présente invention concerne un système de fixation d'une pièce rapportée sur une pièce principale, comprenant :
- un socle destiné à être solidaire de la pièce principale, le socle comportant un premier élément de verrouillage ;
- un dispositif de verrouillage destiné à être solidaire de la pièce rapportée, comportant :
   - un support comprenant un premier aimant ; et
   - un organe de verrouillage monté mobile en rotation sur le support selon un axe de rotation, entre :
      - une configuration de verrouillage dans laquelle un deuxième élément de verrouillage de l'organe de verrouillage est apte à coopérer avec le premier élément de verrouillage du socle pour fixer la pièce rapportée sur la pièce principale ;
      - une configuration de déverrouillage dans laquelle le deuxième élément de verrouillage de l'organe de verrouillage est agencé à l'écart du premier élément de verrouillage du socle de sorte à permettre la désolidarisation de la pièce rapportée par rapport à la pièce principale ;
   l'organe de verrouillage comportant :
   - un premier aimant apte à coopérer avec le premier aimant du support pour contraindre l'organe de verrouillage vers la configuration de verrouillage ;
   - un deuxième aimant.

US 3 681 727 divulgue un tel système de fixation.

Dans ce système de fixation, le premier élément de verrouillage peut être assimilé à la portion marginale de l'ouverture du boîtier et le deuxième élément de verrouillage peut être assimilé à l'ancre de blocage. Il est prévu dans ce système d'utiliser un aimant d'actionnement pour entraîner l'organe de verrouillage de la configuration de verrouillage vers la configuration de déverrouillage.

Toutefois, un tel système de fixation n'est pas entièrement satisfaisant. En effet, il est nécessaire de maintenir l'aimant d'actionnement en permanence contre un des aimants de l'organe de verrouillage tout le long de désassemblage du dispositif de verrouillage par rapport au socle afin d'éviter que l'ancre de blocage et la portion marginale de l'ouverture du boîtier ne coopèrent à nouveau et empêche le désassemblage.

Ceci rend l'opération de désassemblage fastidieuse pour un opérateur désirant séparer le socle et le dispositif de verrouillage.

Le but de l'invention est alors de proposer un système de fixation permettant un désassemblage plus aisé de pièce rapportée par rapport à la pièce principale.

A cet effet, l'invention a pour objet un système de fixation du type susmentionné dans lequel le support du dispositif de verrouillage comprend un deuxième aimant apte à coopérer avec le deuxième aimant de l'organe de verrouillage pour contraindre l'organe de verrouillage vers la configuration de déverrouillage.

Ainsi, la coopération entre le deuxième aimant du support de verrouillage et le deuxième aimant de l'organe de verrouillage permet de maintenir l'organe de verrouillage dans la configuration de déverrouillage. L'opérateur souhaitant séparer la pièce rapportée et la pièce principale n'a alors pas besoin de maintenir un quelconque dispositif d'actionnement pour cela. Le désassemblage de la pièce rapportée par rapport à la pièce principale est ainsi rendu plus aisé.

Suivant d'autres aspects avantageux de l'invention, le système de fixation comprend une ou plusieurs des caractéristiques suivantes, prises isolément ou suivant toutes les combinaisons techniquement possibles :
- le support du dispositif de verrouillage comprend une base s'étendant selon un plan d'extension défini par une direction longitudinale et une direction transversale, la base comportant une première portion comprenant le premier aimant du support et une deuxième portion comprenant le deuxième aimant du support, les premier et deuxième aimants du support du dispositif de verrouillage étant montés à demeure dans la base du support du dispositif de verrouillage ;
- les première et deuxième portions de la base du support du dispositif de verrouillage sont agencées l'une à côté de l'autre selon la direction longitudinale,

l'organe de verrouillage étant monté mobile en rotation entre la configuration de verrouillage et la configuration de déverrouillage sur la base du support selon l'axe de rotation, l'axe de rotation étant sensiblement parallèle à la direction transversale et étant agencé entre les première et deuxième portions de la base du support,
l'organe de verrouillage comportant :
   - une première extension s'étendant selon une première direction d'extension sensiblement perpendiculaire à l'axe de rotation et comprenant le premier aimant de l'organe de verrouillage ;
   - une deuxième extension s'étendant selon une deuxième direction d'extension sensiblement perpendiculaire à l'axe de rotation et comprenant le deuxième aimant de l'organe de verrouillage;
la première direction d'extension et la deuxième direction d'extension formant un angle compris entre 120° et 150° ;
   - le système de fixation comprend en outre un dispositif d'actionnement destiné à entraîner l'organe de verrouillage de la configuration de verrouillage vers la configuration de déverrouillage,
le dispositif d'actionnement comprenant un aimant d'actionnement apte à être agencé à proximité du deuxième aimant du support de sorte que le champ magnétique de l'aimant d'actionnement s'ajoute au champ magnétique du deuxième aimant du support de sorte à entraîner le rapprochement du deuxième aimant de l'organe de verrouillage par rapport au deuxième aimant du support et à provoquer le déplacement de l'organe de verrouillage dans la configuration de déverrouillage,
le deuxième aimant du support du dispositif de verrouillage coopérant avec le deuxième aimant de l'organe de verrouillage pour maintenir l'organe de verrouillage dans la configuration de déverrouillage lorsque l'aimant d'actionnement est écarté du deuxième aimant du support du dispositif de verrouillage ;
   - le socle comprenant une paroi de fond et au moins une paroi latérale, la paroi de fond et l'au moins une paroi latérale délimitant une enceinte,
le dispositif de verrouillage étant déplaçable selon une direction d'insertion sensiblement perpendiculaire à la paroi de fond entre :
   - une position enfoncée dans laquelle l'organe de verrouillage s'étend dans l'enceinte et dans laquelle le deuxième élément de verrouillage de l'organe de verrouillage est apte à coopérer avec le premier élément de verrouillage du socle ; et
   - une position dégagée dans laquelle l'organe de verrouillage s'étend en dehors de l'enceinte et dans laquelle le deuxième élément de verrouillage de l'organe de verrouillage est à l'écart du premier élément de verrouillage du socle ;
      - lorsque le dispositif de verrouillage est en position enfoncée et lorsque l'organe de verrouillage est en configuration de déverrouillage, le déplacement du dispositif de verrouillage de la position enfoncée vers la position dégagée entraîne le déplacement de l'organe de verrouillage vers la configuration de verrouillage ;
      - le système de fixation est tel que :
   - le socle comprend au moins une came;
   - l'organe de verrouillage comprend au moins une contre-came ;
l'au moins une contre-came de l'organe de verrouillage coopérant avec l'au moins une came du socle lorsque le dispositif de verrouillage est déplacé de la position enfoncée vers la position dégagée de sorte que l'organe de verrouillage soit entraîné vers la configuration de verrouillage ;
   - l'au moins une came est formée par une pièce s'étendant depuis la paroi de fond du socle , l'au moins une contre-came étant formée par un pion de l'organe de verrouillage s'étendant selon une direction sensiblement parallèle à l'axe de rotation ;
   - le support du dispositif de verrouillage comprend au moins une paroi de guidage destinée à coopérer avec l'au moins une paroi latérale du socle pour guider le déplacement du dispositif de verrouillage selon la direction d'insertion entre la position dégagée et la position enfoncée ;
   - le système de fixation est tel que :

   - le premier élément de verrouillage du socle comprend :
      - une surface d'accrochage s'étendant sensiblement perpendiculairement à la direction d'insertion ; et
      - une surface en biseau par rapport à la surface d'accrochage ;
   - le deuxième élément de verrouillage de l'organe de verrouillage comprend :
      - un crochet apte à coopérer avec la surface d'accrochage du premier élément de verrouillage lorsque l'organe de verrouillage est dans la configuration de verrouillage, pour fixer la pièce rapportée sur la pièce principale ;
      - une surface en biseau coopérant avec la surface en biseau du premier élément de verrouillage du socle lorsque le dispositif de verrouillage est déplacé vers la position enfoncée de sorte que lorsque le dispositif de verrouillage est déplacé vers la position enfoncée :
         - l'organe de verrouillage est déplacé en rotation selon l'axe de rotation depuis la configuration de verrouillage vers une configuration intermédiaire entre la configuration de verrouillage et la configuration de déverrouillage ; puis
         - l'organe de verrouillage est déplacé en rotation selon l'axe de rotation vers la configuration de verrouillage par attraction magnétique entre le premier aimant de l'organe de verrouillage et le premier aimant du support du dispositif de verrouillage de sorte que le crochet du deuxième élément de verrouillage de l'organe de verrouillage coopère avec la surface d'accrochage du premier élément de verrouillage du socle pour fixer la pièce rapportée sur la pièce principale.

L'invention apparaîtra plus clairement à la lecture de la description qui va suivre, donnée uniquement à titre d'exemple non limitatif, et faite en référence aux dessins dans lesquels :

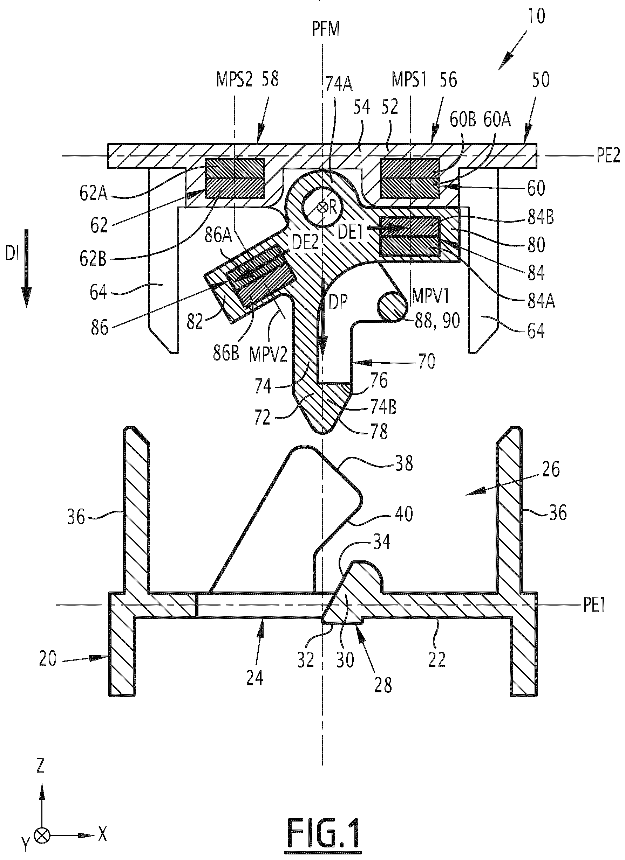

[Fig. 1] la figure 1 est une illustration schématique d'une vue en coupe du système de fixation selon l'invention, selon un plan de coupe sensiblement perpendiculaire au plan d'extension de la base du support du dispositif de verrouillage et à l'axe de rotation de l'organe de verrouillage, le dispositif de verrouillage étant en position dégagée, l'organe de verrouillage étant en configuration de verrouillage ;

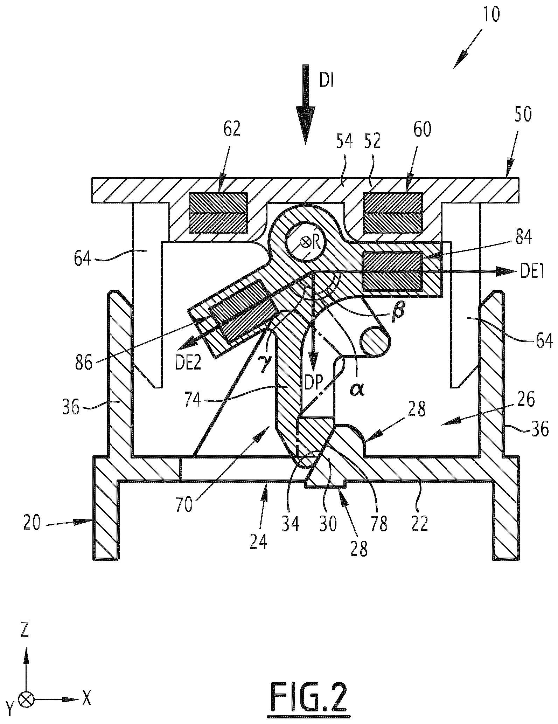

[Fig. 2] la figure 2 est une illustration schématique d'une vue en coupe du système de fixation de la figure 1, selon le même plan de coupe, le dispositif de verrouillage étant en position dégagée, l'organe de verrouillage étant en configuration de verrouillage, la surface en biseau du deuxième élément de verrouillage de l'organe de verrouillage étant appliquée contre la surface en biseau du premier élément de verrouillage du socle ;

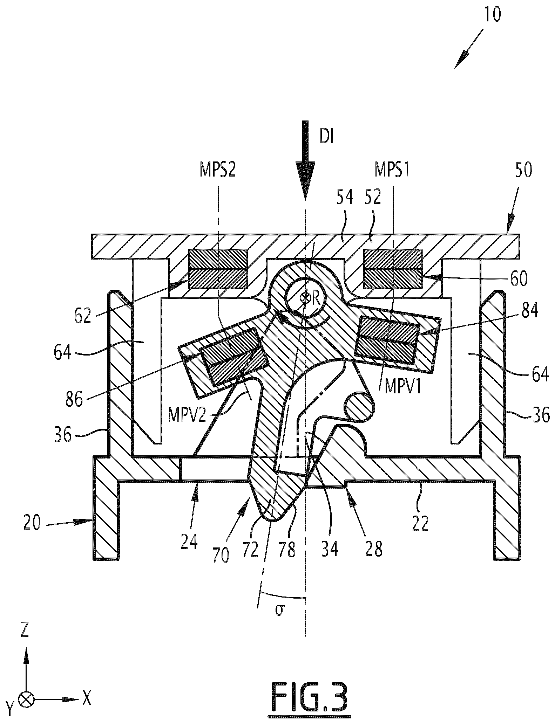

[Fig. 3] la figure 3 est une illustration schématique d'une vue en coupe du système de fixation de la figure 1, selon le même plan de coupe, le dispositif de verrouillage étant en position dégagée, l'organe de verrouillage étant dans la configuraiton intermédiaire entre la configuration de verrouillage et la configuration de déverrouillage ;

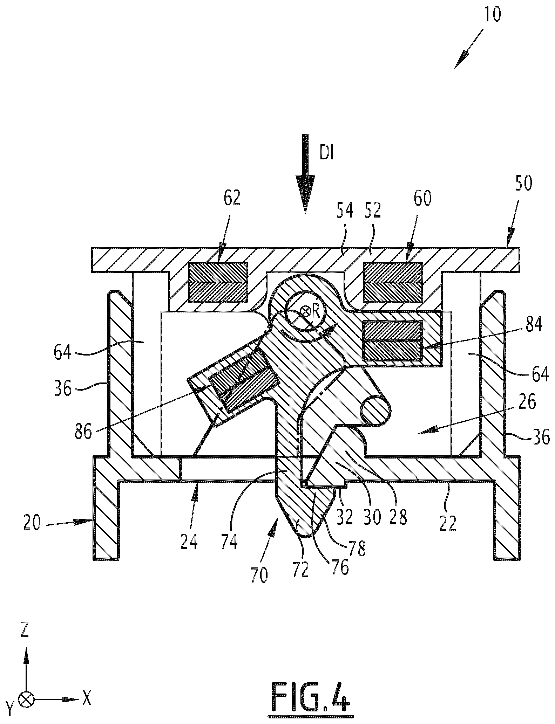

[Fig. 4] la figure 4 est une illustration schématique d'une vue en coupe du système de fixation de la figure 1, selon le même plan de coupe, le dispositif de verrouillage étant en position enfoncée, l'organe de verrouillage étant dans la configuration de verrouillage, le crochet du deuxième élément de verrouillage de l'organe de verrouillage coopérant avec la surface d'accrochage du premier élément de verrouillage du socle ;

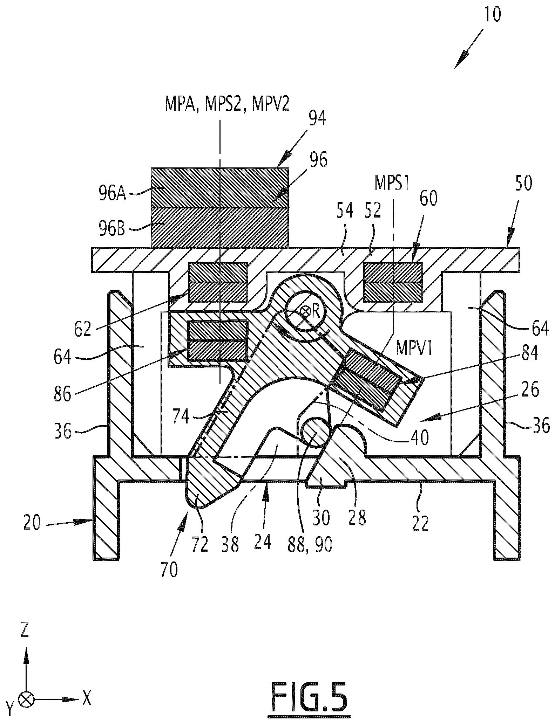

[Fig. 5] la figure 5 est une illustration schématique d'une vue en coupe du système de fixation de la figure 1, selon le même plan de coupe, le dispositif de verrouillage étant en position enfoncée, l'aimant d'actionnement étant agencé à proximité du deuxième aimant du support, l'organe de verrouillage étant dans la configuration de déverrouillage, le crochet du deuxième élément de verrouillage de l'organe de verrouillage étant à l'écart de la surface d'accrochage du premier élément de verrouillage du socle ;

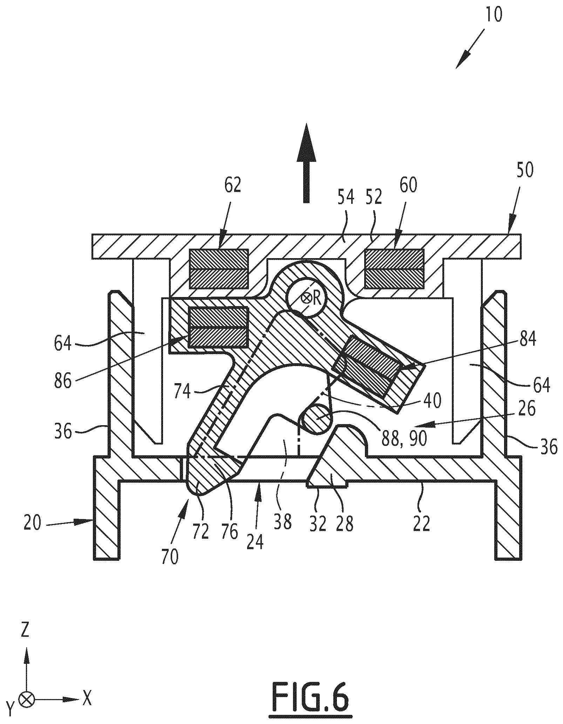

[Fig. 6] la figure 6 est une illustration schématique d'une vue en coupe du système de fixation de la figure 1, selon le même plan de coupe, le dispositif de verrouillage étant écarté de la position enfoncée, l'aimant d'actionnement ayant été écarté du deuxième aimant du support, l'organe de verrouillage étant dans la configuration de déverrouillage, l'au moins une contre-came de l'organe de verrouillage coopérant avec l'au moins une came du socle ;

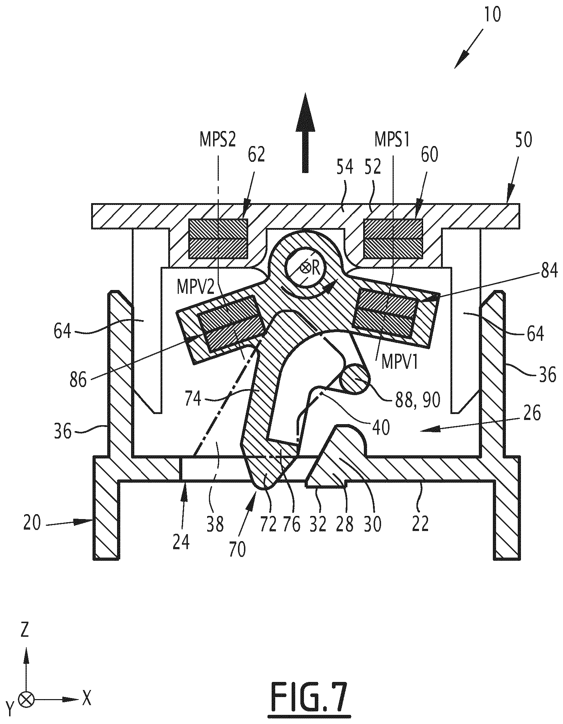

[Fig. 7] la figure 7 est une illustration schématique d'une vue en coupe du système de fixation de la figure 1, selon le même plan de coupe, le dispositif de verrouillage étant écarté de la position enfoncée, le déplacement du dispositif de verrouillage vers la position dégagée entraînant la coopération entre l'au moins une contre-came de l'organe de verrouillage et l'au moins une came du socle de sorte que l'organe de verrouillage soit entraîné vers la configuration de verrouillage ;

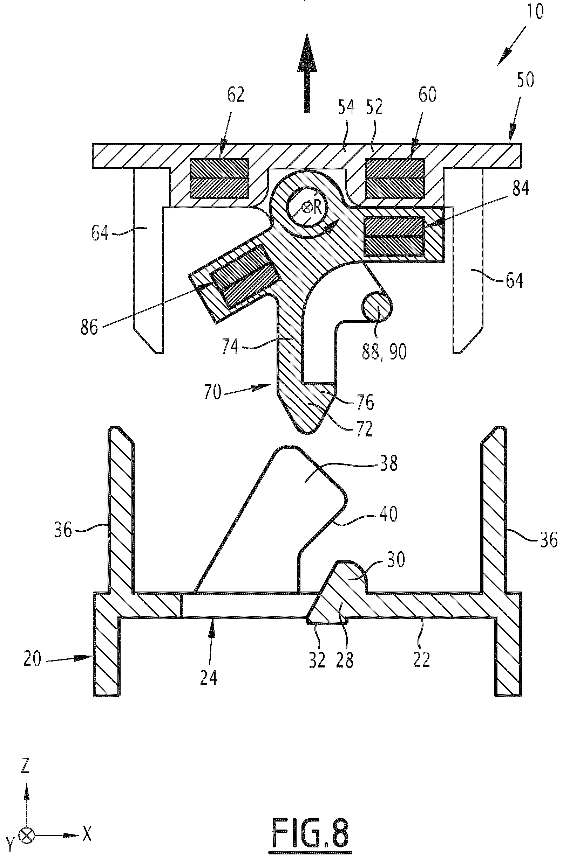

[Fig. 8] la figure 8 est une illustration schématique d'une vue en coupe du système de fixation selon l'invention, selon le même plan de coupe, le dispositif de verrouillage étant en position dégagée, l'organe de verrouillage étant à nouveau en configuration de verrouillage.

En référence aux figures 1 à 8, on décrit un système de fixation 10 d'une pièce rapportée sur une pièce principale, selon l'invention.

Par exemple, la pièce principale et la pièce rapportée sont des pièces d'un véhicule.

Selon un exemple particulier, la pièce rapportée est un élément de garnissage du véhicule et la pièce principale est une armature du véhicule.

Selon un autre exemple particulier, la pièce rapportée est un élément de décor et la pièce principale est une strutre d'élément de garnissage.

Le système de fixation 10 comprend un socle 20 et un dispositif de verrouillage 50.

Avantageusement, le dispositif de fixation 10 comprend en outre un dispositif d'actionnement 94.

Le socle 20 est destiné à être solidaire de la pièce principale.

Le socle 20 comporte un premier élément de verrouillage 28.

Avantageusement, le socle 20 comprend une paroi de fond 22 et au moins une paroi latérale 36 délimitant une enceinte 26. Notamment, le socle 20 comprend deux parois latérales 36.

Encore avantageusement, le socle 20 comprend au moins une came 38. Notamment, le socle 20 comprend deux cames 38.

Par exemple, la paroi de fond 22 s'étend selon un plan d'extension PE1 définit par une direction longitudinale X et une direction transversale Y sensiblement orthogonale à la direction longitudinale X.

Par exemple, la paroi de fond 22 délimite une ouverture 24.

Par exemple, le premier élément de verrouillage 28 comprend une protubérance 30 délimitant au moins partiellement l'ouverture 24.

La protubérance 30 comprend une surface d'accrochage 32 s'étendant sensiblement perpendiculairement à une direction d'insertion DI du dispositif de verrouillage 50, notamment sensiblement parallèlement au plan d'extension PE1 de la paroi de fond 22 et une surface 34 en biseau par rapport à la surface d'accrochage 32.

Notamment, la surface en biseau 34 délimite au moins partiellement l'ouverture 24.

Comme illustré sur l'exemple des figures 1 à 8, l'au moins une paroi latérale 36 s'étend depuis la paroi de fond 22 selon une direction d'élévation Z sensiblement orthogonale à la direction longitudinale X et à la direction transversale Y.

Dans l'exemple spécifique où le socle 20 comprend deux parois latérales 36, les deux parois latérales 36 s'étendent en regard l'une de l'autre et délimitent, entre elles et avec la paroi de fond 22, l'enceinte 26.

Avantageusement, l'au moins une paroi latérale 36 et la paroi de fond 22 sont venues de matière.

L'au moins une came 38 du socle 20 est formée par une pièce s'étendant depuis la paroi de fond 22 du socle 20, notamment selon la direction d'élévation Z, ladite pièce étant par exemple une paroi.

Dans l'exemple spécifique où le socle 20 comprend deux cames 38, les deux cames 38 s'étendent en regard l'une de l'autre, en particulier de part et d'autre de l'ouverture 24 selon la direction transversale Y, et délimitent, entre elles et avec l'au moins une paroi latérale 36 et la paroi de fond 22, l'enceinte 26.

Avantageusement, l'au moins une came 38 comprend une surface de came 40 inclinée par rapport au plan d'extension PE1 de la paroi de fond 22 et orientée sensiblement en direction de la paroi de fond 22.

Encore avantageusement, l'au moins une came 38 et la paroi de fond 22 sont venues de matière.

Encore avantageusement, l'au moins une came 38, la paroi de fond 22 et l'au moins une paroi latérale 36 sont venues de matière.

Le dispositif de verrouillage 50 est destiné à être solidaire de la pièce rapportée.

Le dispositif de verrouillage 50 comporte un support 52 et un organe de verrouillage 70.

Le dispositif de verrouillage 50 est déplaçable selon la direction d'insertion DI sensiblement perpendiculaire à la paroi de fond 22 du socle 20, notamment sensiblement perpendiculaire au plan d'extension PE1 de la paroi de fond 22, entre une position enfoncée et une position dégagée.

Dans la position enfoncée, l'organe de verrouillage 70 s'étend dans l'enceinte 26 et un deuxième élément de verrouillage 72 de l'organe de verrouillage 70 est apte à coopérer avec le premier élément de verrouillage 28 du socle 20.

Dans la position dégagée, l'organe de verrouillage 70 s'étend en dehors de l'enceinte 26 et le deuxième élément de verrouillage 72 de l'organe de verrouillage 70 est à l'écart du premier élément de verrouillage 28 du socle 20.

Avantageusement, lorsque le dispositif de verrouillage 50 est en position enfoncée et lorsque l'organe de verrouillage 70 est dans une configuration de déverrouillage, le déplacement du dispositif de verrouillage 50 de la position enfoncée vers la position dégagée entraîne le déplacement de l'organe de verrouillage 70 vers une configuration de verrouillage, comme cela sera détaillé plus bas.

Le support 52 comprend un premier aimant 60 et un deuxième aimant 62.

Avantageusement, le support 52 comprend une base 54 s'étendant selon un plan d'extension PE2 défini par la direction longitudinale X et la direction transversale Y. En particulier, le plan d'extension PE2 de la base 54 du support 52 est sensiblement parallèle au plan d'extension PE1 de la paroi de fond 22 du socle 20 lorsque le dispositif de verrouillage 50 est dans la position enfoncée.

Encore avantageusement, le support 52 comprend au moins une paroi de guidage 64 destinée à coopérer avec l'au moins une paroi latérale 36 du socle 20 pour guider le déplacement du dispositif de verrouillage 50 selon la direction d'insertion DI entre la position dégagée et la position enfoncée. Notamment, le support 52 comprend deux parois de guidage 64 destinées chacune à coopérer avec une paroi latérale 36 du socle 20.

La base 54 comprend notamment une première portion 56 comprenant le premier aimant 60 du support 52 et une deuxième portion 58 comprenant le deuxième aimant 62 du support 52.

En particulier, les première et deuxième portions 56, 58 de la base 54 du support 52 du dispositif de verrouillage 50 sont agencées l'une à côté de l'autre selon la direction longitudinale X.

Par exemple, les première et deuxième portions 56, 58 de la base 54 sont agencées de part et d'autre d'un plan frontal médian PFM du support 52, défini par les direction transversale Y et d'élévation Z, en particulier symétriquement au plan frontal médian PFM.

Avantageusement, les premier et deuxième aimants 60, 62 sont montés à demeure dans la base 54 du support 52 du dispositif de verrouillage 50. En particulier, chacun des premier et deuxième aimants 60, 62 est inséré dans une cavité strictement incluse dans la base 54. Dans un mode de réalisation, les premier et deuxième aimants 60, 62 sont surmoulés dans la base 54 du support 52.

Par exemple :
- les pôles 60A, 60B du premier aimant 60 du support 52 sont agencés le long d'un axe MPS1 sensiblement perpendiculaire au plan d'extension PE2 de la base 54 ; et
- les pôles 62A, 62B du deuxième aimant 62 du support 52 sont agencés le long d'un axe MPS2 sensiblement perpendiculaire au plan d'extension PE2 de la base 54.

Notamment, les premier et deuxième aimants 60, 62 du support 54 sont des aimants permanents.

Par exemple, la froce de contact généré par chacun des premier et deuxième aimants 60, 62 du support 52 est comprise entre 5 N et 20 N.

L'au moins une paroi de guidage 64 du support 52 s'étend depuis la base 54 sensiblement perpendiculairement au plan d'extension PE2 de la base 54.

Par exemple, entre la position dégagée et la position enfoncée, l'au moins une paroi de guidage 64 coulisse sur l'au moins une paroi latérale 36 du socle 20.

Avantageusement, dans la position enfoncée, l'au moins une paroi de guidage 64 s'étend dans l'enceinte 26 et est appliquée contre l'au moins une paroi latérale 36 du socle 20.

Encore avantageusement, l'au moins une paroi de guidage 64 et la base 54 sont venues de matière.

L'organe de verrouillage 70 est monté mobile en rotation sur le support 52, notamment sur la base 54 du support 52 selon un axe de rotation R entre la configuration de verrouillage (illustrée sur les figures 1, 2, 4 et 8) et la configuration de déverrouillage (illustrée sur les figures 5 et 6).

Avantageusement, l'organe de verrouillage 70 est en outre déplaçable en rotation sur le support 52 selon l'axe de rotation R dans une configuration intermédiaire entre la configuration de verrouillage et la configuration de déverrouillage (illustrée notamment sur les figures 3 et 7).

En particulier, l'axe de rotation R est sensiblement parallèle à la direction transversale Y et s'étend entre les première et deuxième portions 56, 58 de la base 54 du support 52 du dispositif de verrouillage 50 selon la direction longitudinale X.

Dans la configuration de verrouillage, le deuxième élément de verrouillage 72 de l'organe de verrouillage 70 est apte à coopérer avec le premier élément de verrouillage 28 du socle 20 pour fixer le dispositif de verrouillage 50 au socle 20, et notamment pour fixer la pièce rapportée sur la pièce principale.

Dans la configuration de déverrouillage, le deuxième élément de verrouillage 72 de l'organe de verrouillage 70 est agencé à l'écart du premier élément de verrouillage 28 du socle 20 de sorte à permettre la désolidarisation du dispositif de verrouillage 50 par rapport au socle 20, et notamment pour permettre la désolidarisation de la pièce rapportée par rapport à la pièce principale.

L'organe de verrouillage 70 comprend le deuxième élément de verrouillage 72.

L'organe de verrouillage 70 comprend en outre un premier aimant 84 et un deuxième aimant 86.

Avantageusement, l'organe de verrouillage 70 comprend en outre une première extension 80 et une deuxième extension 82.

Encore avantageusement, l'organe de verrrouillage 70 comprend au moins une contre-came 88. En particulier, l'organe de verrouillage 70 comprend deux contre-cames 88.

Le deuxième élément de verrouillage 72 comprend par exemple un pêne 74 s'étendant selon une direction de pêne DP sensiblement perpendiculaire à l'axe de rotation R, depuis une extrémité proximale 74A montée en rotation sur le support 52, notamment sur la base 54 du support 52 et une extrémité distale 74B opposée à l'extrémité proximale 74A.

Par exemple, comme illustré sur les figures 3 à 7, le pêne 74, en particulier l'extrémité distale 74B, est apte à s'étendre à travers l'ouverture 24 du socle 20.

Avantageusement, le pêne 74 comprend un crochet 76 et une surface en biseau 78, notamment agencés à l'extrémité distale 74B du pêne 74.

Le crochet 76 est apte à coopérer avec la surface d'accrochage 32 du premier élément de verrouillage 28 lorsque l'organe de verrouillage 70 est dans la configuration de verrouillage, pour fixer la pièce rapportée sur la pièce principale.

La surface en biseau 78 du pêne 74 coopère avec la surface en biseau 34 du premier élément de verrouillage 28 du socle 20 lorsque le dispositif de verrouillage 50 est déplacé vers la position enfoncée de sorte que lorsque le dispositif de verrouillage 50 est déplacé vers la position enfoncée :
- l'organe de verrouillage 70 est déplacé en rotation selon l'axe de rotation R depuis la configuration de verrouillage vers une configuration intermédiaire entre la configuration de verrouillage et la configuration de déverrouillage (figure 3) ; puis
- l'organe de verrouillage 70 est déplacé en rotation selon l'axe de rotation R vers la configuration de verrouillage par attraction magnétique entre le premier aimant 84 de l'organe de verrouillage 70 et le premier aimant 60 du support 52 du dispositif de verrouillage 50 de sorte que le crochet 76 du deuxième élément de verrouillage 72 de l'organe de verrouillage 70 coopère avec la surface d'accrochage 32 du premier élément de verrouillage 28 du socle 20 pour fixer le dispositif de verrouillage 50 au socle 20, et notamment pour fixer la pièce rapportée sur la pièce principale (figure 4).

Lorsque le crochet 76 du deuxième élément de verrouillage 72 de l'organe de verrouillage 70 coopère avec la surface d'accrochage 32 du premier élément de verrouillage 28 du socle 20, le déplacement du dispositif de verrouillage 50 depuis la position enfoncée vers la position dégagée selon la direction d'insertion DI est empêché.

La première extension 80 s'étend selon une première direction d'extension DE1 sensiblement perpendiculaire à l'axe de rotation R, notamment depuis l'extrémité proximale 74A du pêne 74.

Notamment, la première extension 80 s'étend sensiblement en regard de la première portion 56 de la base 54 du support 52, en particulier selon la direction d'élévation Z.

La première extension 80 comprend notamment le premier aimant 84 de l'organe de verrouillage 70.

La deuxième extension 82 s'étend selon une deuxième direction d'extension DE2 sensiblement perpendiculaire à l'axe de rotation R, notamment depuis l'extrémité proximale 74A du pêne 74.

Notamment, la deuxième extension 82 s'étend sensiblement en regard de la deuxième portion 58 de la base 54 du support 52, en particulier selon la direction d'élévation Z.

La deuxième extension 82 comprend notamment le deuxième aimant 86 de l'organe de verrouillage 70.

La deuxième extension 82 et la première extension 80 s'étendent notamment respectivement de part et d'autre du pêne 74 selon la direction longitudinale X.

Avantageusement, la deuxième direction d'extension DE2 et la première direction d'extension DE1 forment un angle α compris entre 120° et 150°.

Encore avantageusement, la première direction d'extension DE1 et la direction de pêne DP forment un angle β compris entre 80° et 100°.

Encore avantageusement, la deuxième direction d'extension DE2 et la direction de pêne DP forment un angle γ compris entre 20° et 70°.

Les angles α, β et γ dépendent notammant de la puissance des premier et deuxième aimants 60, 62, de la puissance des premier et deuxième aimants 84, 86 et de la distance de ces aimants 60, 62, 84, 86 par rapport à l'axe de rotation R.

Dans un mode de réalisation où les aimants 60, 62, 84, 86 sont de même puissance et à la même distance de l'axe R , l'angle α doit être strictement inférieur à 180°-2σ avec σ étant l'angle de débattement maximum du pêne 74 (entre la direction de pêne DP et la direction d'insertion DI ; voir la figure 3) lors du déplacement du dispositif de verrouillage 50 vers la position enfoncée.

Le premier aimant 84 de l'organe de verrouillage 70 est apte à coopérer avec le premier aimant 60 du support 52 pour contraindre l'organe de verrouillage 70 vers la configuration de verrouillage.

Le deuxième aimant 86 de l'organe de verrouillage 70 est apte à coopérer avec le deuxième aimant 62 du support 52 pour contraindre l'organe de verrouillage 70 vers la configuration de déverrouillage.

Avantageusement, les premier et deuxième aimants 84, 86 de l'organe de verrouillage 70 sont montés à demeure dans les extensions 80, 82 de l'organe de verrouillage 70. En particulier, le premier aimant 84 de l'organe de verrouillage 70 est inséré dans une cavité strictement incluse dans la première extension 80 et le deuxième aimant 86 de l'organe de verrouillage 70 est inséré dans une cavité strictement incluse dans la deuxième extension 82. Dans un mode de réalisation, les premier et deuxième aimants 84,86 sont surmoulés dans l'organe de verrouillage 70, notamment dans les extensions 80, 82.

Par exemple :
- les pôles 84A, 84B du premier aimant 84 de l'organe de verrouillage 70 sont agencés le long d'un axe MPV1 sensiblement perpendiculaire à la première direction d'extension DE1 de la première extension 80 ; et
- les pôles 86A, 86B du deuxième aimant 86 de l'organe de verrouillage 70 sont agencés le long d'un axe MPV2 sensiblement perpendiculaire à la deuxième direction d'extension DE2 de la deuxième extension 82.

Notamment, les premier et deuxième aimants 84, 86 de l'organe de verrouillage 70 sont des aimants permanents.

Par exemple, la force de contact générée par chacun des premier et deuxième aimants 84, 86 de l'organe de verrouillage 70 est comprise entre 5 N et 10 N.

Avantageusement, les premier et deuxième aimants 60, 62 du support 52 du dispositif de verrouillage 50, les premier et deuxième aimants 84, 86 de l'organe de verrouillage 70 ainsi que l'angle α formé par les première et deuxième direction d'extension DE1, DE2 sont tels que :
- dans la configuration de verrouillage, l'organe de verrouillage 70 soit contraint vers la configuration de verrouillage par attraction magnétique entre le premier aimant 60 du support 52 et le premier aimant 84 de l'organe de verrouillage 70 ;
- dans la configuration de déverrouillage, l'organe de verrouillage 70 soit contraint vers la configuration de déverrouillage par attraction magnétique entre le deuxième aimant 62 du support 52 et le deuxième aimant 86 de l'organe de verrouillage 70 ; et
- dans la configuration intermédiaire entre la configuration de verrouillage et la configuratin de déverrouillage, l'organe de verrouillage 70 soit contraint vers la configuration de verrouillage par attraction magnétique entre le premier aimant 60 du support 52 et le premier aimant 84 de l'organe de verrouillage 70.

L'homme du métier comprendra qu'il est possible de modifier le premier aimant 60 du support 52, le deuxième aimant 62 du support 52, le premier aimant 84 de l'organe de verrouillage 70, le deuxième aimant 86 de l'organe de verrouillage 70 et/ou l'angle α formé par les première et deuxième direction d'extension DE1, DE2 pour obtenir un basculement ou non de l'organe de verrouillage 70 dans la configuration de verrouillage ou de déverrouillage en fonction de l'angle formé par le pêne 74, notamment par la direction de pêne DP, avec le plan d'extension PE1 de la paroi de fond 22 du socle 20.

En référence aux figures 5 à 7, l'au moins une contre-came 88 de l'organe de verrouillage 70 coopère avec l'au moins une came 38 du socle 20, notamment avec la surface de came 40, lorsque le dispositif de verrouillage 50 est déplacé de la position enfoncée vers la position dégagée de sorte que l'organe de verrouillage 70 soit entraîné vers la configuration de verrouillage.

En particulier, l'au moins une contre-came 88 est formée par un pion 90 de l'organe de verrouillage 70 s'étendant selon une direction sensiblement parallèle à l'axe de rotation R, en particulier depuis le pêne 74.

Selon l'exemple particulier des figures, chacune des contre-cames 88 coopère avec une came 38 respective du socle 20 lorsque le dispositif de verrouillage 50 est déplacé de la position enfoncée vers la position dégagée de sorte que l'organe de verrouillage 70 soit entraîné vers la configuration de verrouillage.

Avantageusement, lorsque l'organe de verrouillage 70 est en configuration déverrouillée, la coopération entre l'au moins une contre-came 88 et l'au moins une came 38 lors du déplacement du dispositif de verrouillage 50 vers la position dégagée exerce une force sur l'organe de verrouillage 70 supérieure à la force d'attraction magnétique exercée par le deuxième aimant 62 du support 52 sur le deuxième aimant 86 de l'organe de verrouillage 70, de sorte que l'organe de verrouillage 70 passe dans sa configuration de verrouillage.

Encore avantageusement, l'au moins une contre-came 88 et l'au moins une came 38 sont telles que le déplacement de l'organe de verrouillage 70 de la configuration de déverrouillage vers la configuration de verrouillage ait lieu lorsqu'un déplacement suffisant du dispositif de verrouillage 50 selon la direction d'insertion DI a été effectué de sorte que le deuxième élément de verrouillage 72 de l'organe de verrouillage 70, en particulier le crochet 76, ne soit pas retenu par le premier élément de verrouillage 28 du socle 20, en particulier la surface d'accrochage 32. Ainsi, le désassemblage du dispositif de verrouillage 50 et du socle 20 est permis tout en réalisant une remise en configuration de verrouillage de l'organe de verrouillage 70.

En référence aux figures 4 et 5, le dispositif d'actionnement 94 est destiné à entraîner l'organe de verrouillage 70 de la configuration de verrouillage vers la configuration de déverrouillage.

Le dispositif d'actionnement 94 est apte à augmenter l'intensité du champ magnétique du deuxième aimant 62 du support 52 de sorte à entraîner le rapprochement du deuxième aimant 86 de l'organe de verrouillage 70 par rapport au deuxième aimant 62 du support 52 et à provoquer le déplacement de l'organe de verrouillage 70 dans la configuration de déverrouillage.

En particulier, le dispositif d'actionnement 94 comprend un aimant d'actionnement 96 apte à être agencé à proximité du deuxième aimant 62 du support 52 de sorte que le champ magnétique de l'aimant d'actionnement 96 s'ajoute au champ magnétique du deuxième aimant 62 du support 52 de sorte à entraîner le rapprochement du deuxième aimant 86 de l'organe de verrouillage 70 par rapport au deuxième aimant 62 du support 52 et à provoquer le déplacement de l'organe de verrouillage 70 dans la configuration de déverrouillage.

En particulier, en référence à la figure 5, les pôles 96A, 96B de l'aimant d'actionnement 96 sont agencés le long d'un axe MPA.

Notamment, toujours en référence à la figure 5, l'aimant d'actionnement 94 est destiné à être agencé en regard du support 52, notamment de la base 54, notamment de la deuxième portion de base 58, de sorte que l'axe MPA de l'aimant d'actionnement 96 et l'axe MPS2 du deuxième aimant 62 soient sensiblement colinéaires afin que le champ magnétique de l'aimant d'actionnement 96 s'ajoute au champ magnétique du deuxième aimant 62 du support 52 de sorte à entraîner le rapprochement du deuxième aimant 86 de l'organe de verrouillage 70 par rapport au deuxième aimant 62 du support 52 et à provoquer le déplacement de l'organe de verrouillage 70 dans la configuration de déverrouillage.

En référence aux figures 5 et 6, le deuxième aimant 62 du support 52 du dispositif de verrouillage 50 coopère avec le deuxième aimant 86 de l'organe de verrouillage 70 pour maintenir l'organe de verrouillage 70 dans la configuration de déverrouillage lorsque l'aimant d'actionnement 96 est écarté du deuxième aimant 62 du support 52 du dispositif de verrouillage 50.

Comme expliqué ci-dessus, c'est avantageusement la coopération entre l'au moins une came 38 et l'au moins une contre-came 88 lors du déplacement du dispositif de verrouillage 50 vers la position dégagée qui entraîne le rebasculement de l'organe de verrouillage 70 dans la configuration de verrouillage.

Dans ce qui suit, toujours en référence aux figures 1 à 8, on décrit l'utilisation du système de fixation 10.

En référence à la figure 1, le système de fixation 10 est tel que l'organe de verrouillage 70 est dans la configuration verrouillée, le dispositif de verrouillage 50 étant en position dégagée. Dans cette situation, la première direction d'extension DE1 est sensiblement parallèle au plan d'extension PE2 de la base 54 et la première extension 80 est appliquée contre la base 54.

En référence à la figure 2, le dispositif de verrouillage 50 est déplacé vers la position enfoncée, notamment de sorte que l'au moins une paroi de guidage 64 du support 52 coulisse sur l'au moins une paroi latérale 36 du socle 20 et en particulier de sorte que la surface en biseau 78 de l'organe de verrouillage 70 entre en contact avec la surface en biseau 34 du premier élément de verrouillage 28 du socle 20.

En référence à la figure 3, le dispositif de verrouillage 50 est toujours déplacé vers la position enfoncée. En particulier, la surface en biseau 78 du deuxième élément de verrouillage 72 de l'organe de verrouillage 70 coopère avec la surface en biseau 34 du premier élément de verrouillage 28, l'organe de verrouillage 70 étant déplacé dans la configuration intermédiaire entre la configuration de verrouillage et la configuration de déverrouillage. Dans la configuration intermédiaire, l'attraction magnétique entre le deuxième aimant 62 du support 52 et le deuxième aimant 86 de l'organe de verrouillage 70 (notamment en l'absence du dispositif d'actionnement 94) est insuffisante pour entraîner un basculement de l'organe de verrouillage 70 dans la configuration de déverrouillage. Par exemple, cela est dû au fait que la proximité entre le deuxième aimant 62 du support 52 et le deuxième aimant 86 de l'organe de verrouillage est insuffisante. Dans la configuration intermédiaire, la première direction d'extension DE1 forme un angle sensiblement non-nul avec le plan d'extension PE2 de la base 54 et la première extension 80 est écartée de la base 54.

En référence à la figure 4, le dispositif de verrouillage 50 est déplacé dans la position enfoncée. L'organe de verrouillage 70 rebascule depuis la configuration intermédiaire dans la configuration de verrouillage, notamment par attraction magnétique entre le premier aimant 84 et le premier aimant 60. Le deuxième élément de verrouillage 72 de l'organe de verrouillage 70 coopère avec le premier élément de verrouillage 28 du socle 20 pour empêcher tout déplacement du dispositif de verrouillage 50 selon la direction d'insertion DI. Ainsi, le dispositif de verrouillage 50 et le socle 20 sont fixés l'un à l'autre et de même pour la pièce rapportée et la pièce principale. Notamment, la première direction d'extension DE1 est à nouveau sensiblement parallèle au plan d'extension PE2 de la base 54 et la première extension 80 est à nouveau appliquée contre la base 54.

En référence à la figure 5, l'aimant d'actionnement 96 est agencé à proximité du deuxième aimant 62 du support 52. L'organe de verrouillage 70 bascule alors dans la configuration de déverrouillage. Notamment, le deuxième élément de verrouillage 72 est entraîné à l'écart du premier élément de verrouillage 28. Notamment, la deuxième direction d'extension DE2 est alors sensiblement parallèle au plan d'extension PE2 de la base 54 et la deuxième extension 82 est appliquée contre la base 54. Avantageusement, dans cette position, l'élément d'actionnement 96 peut être retiré, l'organe de verrouillage 70 est maintenu en configuration de déverouillage par l'attraction magnétique entre les aimants 62 et 86.

En référence à la figure 6, le dispositif de verrouillage 50 est déplacé vers la position dégagée jusqu'à ce que l'au moins une contre-came 88 entre en contact avec l'au moins une came 38.

En référence à la figure 7, le dispositif de verrouillage 50 est toujours déplacé vers la position dégagée. La coopération entre l'au moins une contre-came 88 et l'au moins une came 38 entraîne le déplacement de l'organe de verrouillage 70 depuis la configuration de déverrouillage vers la configuration de verrouillage jusqu'à ce que le premier aimant 84 de l'organe de verrouillage 70 et le premier aimant 60 du support 52 soient suffisamment proches pour entraîner un basculement de l'organe de verrouillage 70 dans la configuration de verrouillage.

En référence à la figure 8, le dispositif de verrouillage 50 est séparé du socle 20 et l'organe de verrouillage 70 est dans la configuration de verrouillage. Notamment, la première direction d'extension DE1 est à nouveau sensiblement parallèle au plan d'extension PE2 de la base 54 et la première extension 80 est à nouveau appliquée contre la base 54.

Dans le mode de réalisation représenté, la distance entre l'axe de rotation R et les premiers aimants 60, 84 est sensiblement identique à la distance entre l'axe de rotation R et les deuxièmes aimants 62, 86.

Sans sortir du cadre de l'invention, il est également possible de prévoir que la distance entre l'axe de rotation R et les premiers aimants 60, 84 est différente de la distance entre l'axe de rotation R et les deuxièmes aimants 62, 86.

Dans un mode de rélisation particulier, les différents aimants 60, 62, 84, 86 ont une puissance sensiblement identique. Sans sortir du cadre de l'invention, il peut être prévu des aimants ayant des puissances différentes.

Grâce à l'invention, l'organe de verrouillage 70 est maintenu dans la configuration de déverrouillage sans qu'il n'y ait besoin de maintenir l'aimant d'actionnement 96 en position à proximité du deuxième aimant 62 du support 52. Le désassemblage du dispositif de verrouillage 50 par rapport au socle 20, et par conséquent de la pièce rapportée par rapport à la pièce principale est ainsi facilité.

En outre, lors du déplacement du dispositif de verrouillage 50 vers la position dégagée, l'organe de verrouillage 70 est rebasculé dans la configuration de verrouillage, sans qu'il n'y ait besoin pour un opérateur d'effectuer une action spécifique dédiée à ce rebasculement. Il suffit à l'opérateur de déplacer le dispositif de verrouillage 50 à l'écart du socle 20 pour provoquer le retour en configuration de verrouillage. Ainsi, la manipulation du système de fixation 10 est davantage simplifiée.

## Revendications

1. Système de fixation (10) d'une pièce rapportée sur une pièce principale, comprenant :
- un socle (20) destiné à être solidaire de la pièce principale, le socle (20) comportant un premier élément de verrouillage (28) ;
- un dispositif de verrouillage (50) destiné à être solidaire de la pièce rapportée, comportant :
- un support (52) comprenant un premier aimant (60) ; et
- un organe de verrouillage (70) monté mobile en rotation sur le support (52) selon un axe de rotation (R), entre :
- une configuration de verrouillage dans laquelle un deuxième élément de verrouillage (72) de l'organe de verrouillage (70) est apte à coopérer avec le premier élément de verrouillage (28) du socle (20) pour fixer la pièce rapportée sur la pièce principale ;
- une configuration de déverrouillage dans laquelle le deuxième élément de verrouillage (72) de l'organe de verrouillage (70) est agencé à l'écart du premier élément de verrouillage (28) du socle (20) de sorte à permettre la désolidarisation de la pièce rapportée par rapport à la pièce principale ;
l'organe de verrouillage (70) comportant :
- un premier aimant (84) apte à coopérer avec le premier aimant (62) du support (52) pour contraindre l'organe de verrouillage (70) vers la configuration de verrouillage ;
- un deuxième aimant (86) ;
**caractérisé en ce que** le support (52) du dispositif de verrouillage (50) comprend un deuxième aimant (62) apte à coopérer avec le deuxième aimant (86) de l'organe de verrouillage (70) pour contraindre l'organe de verrouillage (70) vers la configuration de déverrouillage.

2. Système de fixation (10) selon la revendication 1, dans lequel le support (52) du dispositif de verrouillage (50) comprend une base (54) s'étendant selon un plan d'extension (PE2) défini par une direction longitudinale (X) et une direction transversale (Y), la base (54) comportant une première portion (56) comprenant le premier aimant (60) du support (52) et une deuxième portion (58) comprenant le deuxième aimant (62) du support (52),
les premier et deuxième aimants (60, 62) du support (52) du dispositif de verrouillage (50) étant montés à demeure dans la base (54) du support (52) du dispositif de verrouillage (50).

3. Système de fixation (10) selon la revendication 2, dans lequel les première et deuxième portions (56, 58) de la base (54) du support (52) du dispositif de verrouillage (50) sont agencées l'une à côté de l'autre selon la direction longitudinale (X), l'organe de verrouillage (70) étant monté mobile en rotation entre la configuration de verrouillage et la configuration de déverrouillage sur la base (54) du support (52) selon l'axe de rotation (R), l'axe de rotation (R) étant sensiblement parallèle à la direction transversale (Y) et étant agencé entre les première et deuxième portions (56, 58) de la base (54) du support (52),
l'organe de verrouillage (70) comportant :
- une première extension (80) s'étendant selon une première direction d'extension (DE1) sensiblement perpendiculaire à l'axe de rotation (R) et comprenant le premier aimant (84) de l'organe de verrouillage (70) ;
- une deuxième extension (82) s'étendant selon une deuxième direction d'extension (DE2) sensiblement perpendiculaire à l'axe de rotation (R) et comprenant le deuxième aimant (86) de l'organe de verrouillage (70) ;
la première direction d'extension (DE1) et la deuxième direction d'extension (DE2) formant un angle (α) compris entre 120° et 150°.

4. Système de fixation (10) selon l'une quelconque des revendications précédentes, comprenant en outre un dispositif d'actionnement (94) destiné à entraîner l'organe de verrouillage (70) de la configuration de verrouillage vers la configuration de déverrouillage,
le dispositif d'actionnement (94) comprenant un aimant d'actionnement (96) apte à être agencé à proximité du deuxième aimant (62) du support (52) de sorte que le champ magnétique de l'aimant d'actionnement (96) s'ajoute au champ magnétique du deuxième aimant (62) du support (52) de sorte à entraîner le rapprochement du deuxième aimant (86) de l'organe de verrouillage (70) par rapport au deuxième aimant (62) du support (52) et à provoquer le déplacement de l'organe de verrouillage (70) dans la configuration de déverrouillage,
le deuxième aimant (62) du support (52) du dispositif de verrouillage (50) coopérant avec le deuxième aimant (86) de l'organe de verrouillage (70) pour maintenir l'organe de verrouillage (70) dans la configuration de déverrouillage lorsque l'aimant d'actionnement (96) est écarté du deuxième aimant (62) du support (52) du dispositif de verrouillage (50).

5. Système de fixation (10) selon l'une quelconque des revendications précédentes, dans lequel le socle (20) comprend une paroi de fond (22) et au moins une paroi latérale (36), la paroi de fond (22) et l'au moins une paroi latérale (36) délimitant une enceinte (26),
le dispositif de verrouillage (50) étant déplaçable selon une direction d'insertion (DI) sensiblement perpendiculaire à la paroi de fond (22) entre :
- une position enfoncée dans laquelle l'organe de verrouillage (70) s'étend dans l'enceinte (26) et dans laquelle le deuxième élément de verrouillage (72) de l'organe de verrouillage (70) est apte à coopérer avec le premier élément de verrouillage (28) du socle (20) ; et
- une position dégagée dans laquelle l'organe de verrouillage (70) s'étend en dehors de l'enceinte (26) et dans laquelle le deuxième élément de verrouillage (72) de l'organe de verrouillage (70) est à l'écart du premier élément de verrouillage (28) du socle (20).

6. Système de fixation (10) selon la revendication 5, dans lequel lorsque le dispositif de verrouillage (50) est en position enfoncée et lorsque l'organe de verrouillage (70) est en configuration de déverrouillage, le déplacement du dispositif de verrouillage (50) de la position enfoncée vers la position dégagée entraîne le déplacement de l'organe de verrouillage (70) vers la configuration de verrouillage.

7. Système de fixation (10) selon la revendication 6, dans lequel :
- le socle (20) comprend au moins une came (38) ;
- l'organe de verrouillage (70) comprend au moins une contre-came (88) ;
l'au moins une contre-came (88) de l'organe de verrouillage (70) coopérant avec l'au moins une came (38) du socle (20) lorsque le dispositif de verrouillage (50) est déplacé de la position enfoncée vers la position dégagée de sorte que l'organe de verrouillage (70) soit entraîné vers la configuration de verrouillage.

8. Système de fixation (10) selon la revendication 7, dans lequel l'au moins une came (38) est formée par une pièce s'étendant depuis la paroi de fond (22) du socle (20), l'au moins une contre-came (88) étant formée par un pion (90) de l'organe de verrouillage (70) s'étendant selon une direction sensiblement parallèle à l'axe de rotation (R).

9. Système de fixation (10) selon l'une quelconque des revendications 5 à 8, dans lequel le support (52) du dispositif de verrouillage (50) comprend au moins une paroi de guidage (64) destinée à coopérer avec l'au moins une paroi latérale (36) du socle (20) pour guider le déplacement du dispositif de verrouillage (50) selon la direction d'insertion (DI) entre la position dégagée et la position enfoncée.

10. Système de fixation (10) selon l'une quelconque des revendications 5 à 9, dans lequel :
- le premier élément de verrouillage (28) du socle (20) comprend :
- une surface d'accrochage (32) s'étendant sensiblement perpendiculairement à la direction d'insertion (DI) ; et
- une surface (34) en biseau par rapport à la surface d'accrochage (32) ;
- le deuxième élément de verrouillage (72) de l'organe de verrouillage (70) comprend :
- un crochet (76) apte à coopérer avec la surface d'accrochage (32) du premier élément de verrouillage (28) lorsque l'organe de verrouillage (70) est dans la configuration de verrouillage, pour fixer la pièce rapportée sur la pièce principale ;
- une surface en biseau (78) coopérant avec la surface en biseau (34) du premier élément de verrouillage (28) du socle (20) lorsque le dispositif de verrouillage (50) est déplacé vers la position enfoncée de sorte que lorsque le dispositif de verrouillage (50) est déplacé vers la position enfoncée :
- l'organe de verrouillage (70) est déplacé en rotation selon l'axe de rotation (R) depuis la configuration de verrouillage vers une configuration intermédiaire entre la configuration de verrouillage et la configuration de déverrouillage ; puis
- l'organe de verrouillage (70) est déplacé en rotation selon l'axe de rotation (R) vers la configuration de verrouillage par attraction magnétique entre le premier aimant (84) de l'organe de verrouillage (70) et le premier aimant (60) du support (52) du dispositif de verrouillage (50) de sorte que le crochet (76) du deuxième élément de verrouillage (72) de l'organe de verrouillage (70) coopère avec la surface d'accrochage (32) du premier élément de verrouillage (28) du socle (20) pour fixer la pièce rapportée sur la pièce principale.

## Patentansprüche

1. System (10) zum Befestigen eines Anbauteils an einem Hauptteil, umfassend:
- eine Basis (20), die dazu bestimmt ist, starr mit dem Hauptteil verbunden zu werden, wobei die Basis (20) ein erstes Verriegelungselement (28) aufweist;
- eine Verriegelungsvorrichtung (50), die dazu bestimmt ist, starr mit dem Anbauteil verbunden zu werden, aufweisend:
- einen Träger (52), der einen ersten Magneten (60) umfasst; und
- ein Verriegelungsglied (70), das so an dem Träger (52) montiert ist, dass es um eine Drehachse (R) drehbar ist zwischen:
- einer Verriegelungskonfiguration, in der ein zweites Verriegelungselement (72) des Verriegelungsglieds (70) in der Lage ist, mit dem ersten Verriegelungselement (28) der Basis (20) zusammenzuwirken, um das Anbauteil am Hauptteil zu befestigen;
- einer Entriegelungskonfiguration, in der das zweite Verriegelungselement (72) des Verriegelungsglieds (70) in einem Abstand zum ersten Verriegelungselement (28) der Basis (20) so angeordnet ist, dass das Anbauteil vom Hauptteil getrennt werden kann;
wobei das Verriegelungsglied (70) aufweist:
- einen ersten Magneten (84), der in der Lage ist, mit dem ersten Magneten (62) des Trägers (52) zusammenzuwirken, um das Verriegelungsglied (70) in Richtung der Verriegelungskonfiguration zu drücken;
- einen zweiten Magneten (86);
**dadurch gekennzeichnet, dass** der Träger (52) der Verriegelungsvorrichtung (50) einen zweiten Magneten (62) umfasst, der in der Lage ist, mit dem zweiten Magneten (86) des Verriegelungsglieds (70) zusammenzuwirken, um das Verriegelungsglied (70) in Richtung der Entriegelungskonfiguration zu drücken.

2. Befestigungssystem (10) nach Anspruch 1, wobei der Träger (52) der Verriegelungsvorrichtung (50) eine Basis (54) umfasst, die sich in einer Erstreckungsebene (PE2) erstreckt, die durch eine Längsrichtung (X) und eine Querrichtung (Y) definiert ist, wobei die Basis (54) einen ersten Abschnitt (56), der den ersten Magneten (60) des Trägers (52) umfasst, und einen zweiten Abschnitt (58), der den zweiten Magneten (62) des Trägers (52) umfasst, aufweist,
wobei der erste und der zweite Magnet (60, 62) des Trägers (52) der Verriegelungsvorrichtung (50) dauerhaft in der Basis (54) des Trägers (52) der Verriegelungsvorrichtung (50) montiert sind.

3. Befestigungssystem (10) nach Anspruch 2, wobei der erste und der zweite Abschnitt (56, 58) der Basis (54) des Trägers (52) der Verriegelungsvorrichtung (50) in der Längsrichtung (X) nebeneinander angeordnet sind,
wobei das Verriegelungsglied (70) so auf der Basis (54) des Trägers (52) montiert ist, dass es um die Drehachse (R) zwischen der Verriegelungskonfiguration und der Entriegelungskonfiguration drehbar ist, wobei die Drehachse (R) im Wesentlichen parallel zu der Querrichtung (Y) verläuft und sich zwischen dem ersten und dem zweiten Abschnitt (56, 58) der Basis (54) des Trägers (52) befindet,
wobei das Verriegelungsglied (70) aufweist:
- eine erste Erstreckung (80), die sich in einer ersten Erstreckungsrichtung (DE1) im Wesentlichen senkrecht zu der Drehachse (R) erstreckt und den ersten Magneten (84) des Verriegelungsglieds (70) umfasst;
- eine zweite Erstreckung (82), die sich in einer zweiten Erstreckungsrichtung (DE2) im Wesentlichen senkrecht zu der Drehachse (R) erstreckt und den zweiten Magneten (86) des Verriegelungsglieds (70) umfasst;
wobei die erste Erstreckungsrichtung (DE1) und die zweite Erstreckungsrichtung (DE2) einen Winkel (α) zwischen 120° und 150° bilden.

4. Befestigungssystem (10) nach einem der vorstehenden Ansprüche, ferner umfassend eine Betätigungsvorrichtung (94), die dazu bestimmt ist, das Verriegelungsglied (70) aus der Verriegelungskonfiguration in die Entriegelungskonfiguration zu bewegen,
wobei die Betätigungsvorrichtung (94) einen Betätigungsmagneten (96) umfasst, der in der Nähe des zweiten Magneten (62) des Trägers (52) angeordnet werden kann, sodass sich das Magnetfeld des Betätigungsmagneten (96) zu dem Magnetfeld des zweiten Magneten (62) des Trägers (52) addiert, um zu bewirken, dass sich der zweite Magnet (86) des Verriegelungsglieds (70) dem zweiten Magneten (62) des Trägers (52) nähert, und zu bewirken, dass sich das Verriegelungsglied (70) in die Entriegelungskonfiguration bewegt,
wobei der zweite Magnet (62) des Trägers (52) der Verriegelungsvorrichtung (50) mit dem zweiten Magneten (86) des Verriegelungsglieds (70) zusammenwirkt, um das Verriegelungsglied (70) in der Entriegelungskonfiguration zu halten, wenn der Betätigungsmagnet (96) von dem zweiten Magneten (62) des Trägers (52) der Verriegelungsvorrichtung (50) wegbewegt wird.

5. Befestigungssystem (10) nach einem der vorstehenden Ansprüche, wobei die Basis (20) eine Bodenwand (22) und mindestens eine Seitenwand (36) umfasst, wobei die Bodenwand (22) und die mindestens eine Seitenwand (36) einen umschlossenen Raum (26) begrenzen,
wobei die Verriegelungsvorrichtung (50) in einer Einführrichtung (DI) im Wesentlichen senkrecht zu der Bodenwand (22) bewegbar ist zwischen:
- einer niedergedrückten Stellung, in der sich das Verriegelungsglied (70) in den umschlossenen Raum (26) erstreckt und in der das zweite Verriegelungselement (72) des Verriegelungsglieds (70) in der Lage ist, mit dem ersten Verriegelungselement (28) der Basis (20) zusammenzuwirken; und
- einer freigegebenen Stellung, in der sich das Verriegelungsglied (70) außerhalb des umschlossenen Raums (26) erstreckt und in der sich das zweite Verriegelungselement (72) des Verriegelungsglieds (70) in einem Abstand zum ersten Verriegelungselement (28) der Basis (20) befindet.

6. Befestigungssystem (10) nach Anspruch 5, wobei, wenn sich die Verriegelungsvorrichtung (50) in der niedergedrückten Stellung befindet und wenn sich das Verriegelungsglied (70) in der Entriegelungskonfiguration befindet, das Bewegen der Verriegelungsvorrichtung (50) aus der niedergedrückten Stellung in die freigegebene Stellung bewirkt, dass sich das Verriegelungsglied (70) in die Verriegelungskonfiguration bewegt.

7. Befestigungssystem (10) nach Anspruch 6, wobei:
- die Basis (20) mindestens eine Nocke (38) umfasst;
- das Verriegelungsglied (70) mindestens einen Nockenmitnehmer (88) umfasst;
wobei der mindestens eine Nockenmitnehmer (88) des Verriegelungsglieds (70) mit der mindestens einen Nocke (38) der Basis (20) zusammenwirkt, wenn die Verriegelungsvorrichtung (50) aus der niedergedrückten Stellung in die freigegebene Stellung bewegt wird, sodass das Verriegelungsglied (70) in Richtung der Verriegelungskonfiguration bewegt wird.

8. Befestigungssystem (10) nach Anspruch 7, wobei die mindestens eine Nocke (38) durch ein Teil gebildet wird, das sich von der Bodenwand (22) der Basis (20) erstreckt, wobei der mindestens eine Nockenmitnehmer (88) durch einen Stift (90) des Verriegelungsglieds (70) gebildet wird, der sich in einer Richtung im Wesentlichen parallel zu der Drehachse (R) erstreckt.

9. Befestigungssystem (10) nach einem der Ansprüche 5 bis 8, wobei der Träger (52) der Verriegelungsvorrichtung (50) mindestens eine Führungswand (64) umfasst, die dazu bestimmt ist, mit der mindestens einen Seitenwand (36) der Basis (20) zusammenzuwirken, um die Bewegung der Verriegelungsvorrichtung (50) in Einführrichtung (DI) zwischen der freigegebenen Stellung und der niedergedrückten Stellung zu führen.

10. Befestigungssystem (10) nach einem der Ansprüche 5 bis 9, wobei:
- das erste Verriegelungselement (28) der Basis (20) umfasst:
- eine Einhakoberfläche (32), die sich im Wesentlichen senkrecht zu der Einführrichtung (DI) erstreckt; und
- eine Oberfläche (34), die relativ zu der Einhakoberfläche (32) abgeschrägt ist;
- das zweite Verriegelungselement (72) des Verriegelungsglieds (70) umfasst:
- einen Haken (76), der in der Lage ist, mit der Einhakoberfläche (32) des ersten Verriegelungselements (28) zusammenzuwirken, wenn sich das Verriegelungsglied (70) in der Verriegelungskonfiguration befindet, um das Anbauteil an dem Hauptteil zu befestigen;
- eine abgeschrägte Oberfläche (78), die mit der abgeschrägten Oberfläche (34) des ersten Verriegelungselements (28) der Basis (20) zusammenwirkt, wenn die Verriegelungsvorrichtung (50) in Richtung der niedergedrückten Stellung bewegt wird, sodass, wenn die Verriegelungsvorrichtung (50) in Richtung der niedergedrückten Stellung bewegt wird:
- das Verriegelungsglied (70) um die Drehachse (R) aus der Verriegelungskonfiguration in eine Zwischenkonfiguration zwischen der Verriegelungskonfiguration und der Entriegelungskonfiguration gedreht wird und dann
- das Verriegelungsglied (70) durch magnetische Anziehung zwischen dem ersten Magneten (84) des Verriegelungsglieds (70) und dem ersten Magneten (60) des Trägers (52) der Verriegelungsvorrichtung (50) um die Drehachse (R) in Richtung der Verriegelungskonfiguration gedreht wird, sodass der Haken (76) des zweiten Verriegelungselements (72) des Verriegelungsglieds (70) mit der Einhakoberfläche (32) des ersten Verriegelungselements (28) der Basis (20) zusammenwirkt, um das Anbauteil an dem Hauptteil zu befestigen.

## Claims

1. A system (10) for fastening an attachment part to a main part, comprising:
- a base (20) intended to be rigidly connected to the main part, the base (20) having a first locking element (28);
- a locking device (50) intended to be rigidly connected to the attachment part, having:
- a support (52) comprising a first magnet (60); and
- a locking member (70) mounted on the support (52) so as to be rotatable about a rotation axis (R) between:
- a locking configuration in which a second locking element (72) of the locking member (70) is able to cooperate with the first locking element (28) of the base (20) in order to fasten the attachment part to the main part;
- an unlocking configuration in which the second locking element (72) of the locking member (70) is arranged at a distance from the first locking element (28) of the base (20) so as to allow the attachment part to be disconnected from the main part;
the locking member (70) having:
- a first magnet (84) able to cooperate with the first magnet (62) of the support (52) in order to urge the locking member (70) toward the locking configuration;
- a second magnet (86);
**characterized in that** the support (52) of the locking device (50) comprises a second magnet (62) able to cooperate with the second magnet (86) of the locking member (70) in order to urge the locking member (70) toward the unlocking configuration.

2. The fastening system (10) according to claim 1, wherein the support (52) of the locking device (50) comprises a base (54) extending in an extension plane (PE2) defined by a longitudinal direction (X) and a transverse direction (Y), the base (54) having a first portion (56) comprising the first magnet (60) of the support (52) and a second portion (58) comprising the second magnet (62) of the support (52),
the first and the second magnet (60, 62) of the support (52) of the locking device (50) being permanently mounted in the base (54) of the support (52) of the locking device (50).

3. The fastening system (10) according to claim 2, wherein the first and the second portion (56, 58) of the base (54) of the support (52) of the locking device (50) are arranged next to one another in the longitudinal direction (X),
the locking member (70) being mounted on the base (54) of the support (52) so as to be rotatable about the rotation axis (R) between the locking configuration and the unlocking configuration, the rotation axis (R) being substantially parallel to the transverse direction (Y) and being located between the first and the second portion (56, 58) of the base (54) of the support (52),
the locking member (70) having:
- a first extension (80) extending in a first extension direction (DE1) substantially perpendicular to the rotation axis (R) and comprising the first magnet (84) of the locking member (70);
- a second extension (82) extending in a second extension direction (DE2) substantially perpendicular to the rotation axis (R) and comprising the second magnet (86) of the locking member (70);
the first extension direction (DE1) and the second extension direction (DE2) forming an angle (α) of between 120° and 150°.

4. The fastening system (10) according to any of the preceding claims, further comprising an actuating device (94) intended to drive the locking member (70) from the locking configuration to the unlocking configuration,
the actuating device (94) comprising an actuating magnet (96) able to be arranged in proximity to the second magnet (62) of the support (52) so that the magnetic field of the actuating magnet (96) adds to the magnetic field of the second magnet (62) of the support (52) so as to cause the second magnet (86) of the locking member (70) to approach the second magnet (62) of the support (52) and cause the locking member (70) to move into the unlocking configuration,
the second magnet (62) of the support (52) of the locking device (50) cooperating with the second magnet (86) of the locking member (70) in order to keep the locking member (70) in the unlocking configuration when the actuating magnet (96) is moved away from the second magnet (62) of the support (52) of the locking device (50).

5. The fastening system (10) according to any of the preceding claims, wherein the base (20) comprises a bottom wall (22) and at least one side wall (36), the bottom wall (22) and the at least one side wall (36) delimiting an enclosure (26),
the locking device (50) being movable in an insertion direction (DI) substantially perpendicular to the bottom wall (22) between:
- a depressed position in which the locking member (70) extends into the enclosure (26) and in which the second locking element (72) of the locking member (70) is able to cooperate with the first locking element (28) of the base (20); and
- a released position in which the locking member (70) extends outside the enclosure (26) and in which the second locking element (72) of the locking member (70) is at a distance from the first locking element (28) of the base (20).

6. The fastening system (10) according to claim 5, wherein when the locking device (50) is in the depressed position and when the locking member (70) is in the unlocking configuration, moving the locking device (50) from the depressed position to the released position causes the locking member (70) to move to the locking configuration.

7. The fastening system (10) according to claim 6, wherein:
- the base (20) comprises at least one cam (38);
- the locking member (70) comprises at least one cam follower (88);
the at least one cam follower (88) of the locking member (70) cooperating with the at least one cam (38) of the base (20) when the locking device (50) is moved from the depressed position to the released position so that the locking member (70) is driven toward the locking configuration.

8. The fastening system (10) according to claim 7, wherein the at least one cam (38) is formed by a part extending from the bottom wall (22) of the base (20), the at least one cam follower (88) being formed by a pin (90) of the locking member (70) extending in a direction substantially parallel to the rotation axis (R).

9. The fastening system (10) according to any of claims 5 to 8, wherein the support (52) of the locking device (50) comprises at least one guide wall (64) intended to cooperate with the at least one side wall (36) of the base (20) in order to guide the movement of the locking device (50) in the insertion direction (DI) between the released position and the depressed position.

10. The fastening system (10) according to any of claims 5 to 9, wherein:
- the first locking element (28) of the base (20) comprises:
- a hooking surface (32) extending substantially perpendicular to the insertion direction (DI); and
- a surface (34) that is beveled relative to the hooking surface (32);
- the second locking element (72) of the locking member (70) comprises:
- a hook (76) able to cooperate with the hooking surface (32) of the first locking element (28) when the locking member (70) is in the locking configuration, in order to fasten the attachment part to the main part;
- a beveled surface (78) cooperating with the beveled surface (34) of the first locking element (28) of the base (20) when the locking device (50) is moved toward the depressed position, so that when the locking device (50) is moved toward the depressed position:
- the locking member (70) is rotated about the rotation axis (R) from the locking configuration to an intermediate configuration between the locking configuration and the unlocking configuration; then
- the locking member (70) is rotated about the rotation axis (R) toward the locking configuration by magnetic attraction between the first magnet (84) of the locking member (70) and the first magnet (60) of the support (52) of the locking device (50) so that the hook (76) of the second locking element (72) of the locking member (70) cooperates with the hooking surface (32) of the first locking element (28) of the base (20) in order to fasten the attachment part to the main part.
